# EUROPEAN PATENT APPLICATION

(11) **EP 4 541 657 A1**
(43) Date of publication of application: **23.04.2025**
(21) Application number: 23204412.3
(22) Date of filing: 18.10.2023
(51) Int. Cl.: B60P 1/16, B60L 1/00, B60L 58/22

(54) **A METHOD AND A SYSTEM FOR CONTROLLING A HYDRAULIC SYSTEM OF AN ELECTRIC WORKING MACHINE**

(71) Applicant: Volvo Construction Equipment AB, 631 85 Eskilstuna (SE)
(72) Inventor: MATTSSON, Per, 294 91 Sölvesborg (SE); JOHANSSON, Thomas, 364 30 Åseda (SE)
(74) Representative: Kransell & Wennborg KB

(57) **Abstract**

A system and method for controlling a hydraulic system (300) of an electric working machine (100). The hydraulic system comprises:
- a first pump (311) driven by a first electric motor (312) powered by a first battery (211), and a second pump (321) driven by a second electric motor (322) powered by a second battery (221), the pumps being variable displacement pumps arranged to automatically adjust pump displacements in dependence on hydraulic power demand,
- a common hydraulic valve system (330).

The method comprises:
- determining first and second charge levels of the first and second batteries, respectively,
- activating a charge balancing operating mode in response to determining that the second charge level exceeds the first charge level by a threshold amount.

In the charge balancing operating mode, the first electric motor is controlled to a lower rotational speed than the second electric motor, and has a lower power consumption than the second electric motor.

## Description

### TECHNICAL FIELD

The disclosure relates generally to control of hydraulic systems in electric working machines. In particular aspects, the disclosure relates to a computer system and a method for controlling a hydraulic system of an electric working machine. The disclosure can be applied to heavy-duty working machines and construction equipment, among other vehicle types. Although the disclosure may be described with respect to a particular working machine, the disclosure is not restricted to any particular working machine.

### BACKGROUND

Heavy-duty electric working machines, such as electrically powered hauler vehicles and dump trucks, usually comprise more than one driven axle, such as two driven axles. Such working machines typically also comprises an electrically powered hydraulic system for providing hydraulic power to hydraulic consumers of the working machine. In heavy-duty applications, it may be advantageous to provide separate electric systems, each powering one of the axles. A problem that may arise when separate electric systems are provided is that battery packs of the respective electric systems may discharge unevenly, i.e., battery packs used for powering a rear axle of the working machine may discharge more rapidly than battery packs used for powering a front axle. A charging stop may hence be necessary before the battery packs used for powering the front axle are fully discharged.

### SUMMARY

According to a first aspect of the disclosure, a computer system comprising processing circuitry configured to control a hydraulic system of an electric working machine is provided. The hydraulic system comprises:
- a first pressure supplier powered by a first electric energy storage system,
- a second pressure supplier powered by a second electric energy storage system, and
- a common hydraulic valve system via which the first and second pressure suppliers are configured to supply hydraulic fluid to at least one hydraulic consumer of the working machine.
The first pressure supplier comprises a first pump driven by a first electric motor, and the second pressure supplier comprises a second pump driven by a second electric motor, the first and second pumps being variable displacement pumps arranged to automatically adjust pump displacements in dependence on a hydraulic power demand of the at least one hydraulic consumer. The processing circuitry is configured to:
- determine a first charge level of the first electric energy storage system and a second charge level of the second electric energy storage system, and
- activate a charge balancing operating mode in response to determining that the second charge level exceeds the first charge level by at least a threshold amount.

In the charge balancing operating mode, the first electric motor is controlled to a first rotational speed being lower than a second rotational speed of the second electric motor, whereby an electric power consumption of the first electric motor is lower than that of the second electric motor.

The first aspect of the disclosure may seek to provide a computer system for controlling a hydraulic system of an electric working machine comprising two separate electric energy storage systems such that charge balancing is possible when one of the electric energy storage systems discharges faster than the other electric energy storage system. A technical benefit may include an improved total battery range, resulting in fewer charging stops and improved mission efficiency of the working machine.

In the charge balancing mode, the rotational speed of the first electric motor is controlled to be lower than that of the second electric motor, without affecting a first pump displacement of the first pump. In other words, the first pump displacement of the first pump can still be automatically adjusted/controlled in dependence on the hydraulic power demand, but with the first electric motor running at a lower rotational speed. The second pump displacement of the second pump is also automatically adjusted/controlled in dependence on the hydraulic power demand. Since the rotational speed of the second electric motor is higher than that of the first electric motor, a relatively larger amount of hydraulic power will be provided by the second pressure supplier.

Optionally in some examples, including in at least one preferred example, the processing circuitry is further configured to obtain a total hydraulic power demand of the at least one hydraulic consumer, wherein the processing circuitry is only configured to activate the charge balancing operating mode in response to determining that the total hydraulic power demand is below a threshold level. A technical benefit may include that the charge balancing mode is not activated when the hydraulic power demand is high, whereby operational disturbances may be avoided.

Optionally in some examples, including in at least one preferred example, the threshold level is set in dependence on a maximum hydraulic power demand of the at least one hydraulic consumer, such as to a value within a range of 70-90% of the maximum hydraulic power demand of the at least one hydraulic consumer.

Optionally in some examples, including in at least one preferred example, the working machine comprises a tiltable body configured to carry a payload, and the threshold level is set to a value lower than a hydraulic power demand for dumping of the payload by tilting the tiltable body. Hence, the threshold level is set such that charge balancing is avoided during dumping of the payload.

Optionally in some examples, including in at least one preferred example, the processing circuitry is further configured to receive weight data indicative of a current weight of the working machine, and set the threshold level in dependence on the weight data. A technical benefit may include that the triggering of the charge balancing mode can be adapted depending on the current weight of the working machine, such as depending on if the working machine carries a load or not. For example, the threshold level may be set to a lower value for a lower weight, and to a higher value for a higher weight. In this way, charge balancing may be avoided during dumping regardless of the weight of the load.

According to a second aspect of the disclosure, a working machine comprising or being communicatively connected to the computer system of the first aspect is provided. The working machine comprises the hydraulic system, the first electric energy storage system, and the second electric energy storage system. The second aspect of the disclosure may seek to provide a working machine in which charge balancing is possible when one of two separate electric energy storage systems discharges faster than the other one. A technical benefit may include an improved total battery range, resulting in fewer charging stops and improved mission efficiency of the working machine.

Optionally in some examples, including in at least one preferred example, the working machine further comprises a first electric propulsion unit configured to be powered by the first electric energy storage system, and a second electric propulsion unit configured to be powered by the second electric energy storage system. The first electric propulsion unit is arranged to drive a first axle of the working machine, and the second electric propulsion unit is arranged to drive a second axle of the working machine. The working machine is hence an electrically operated working machine.

According to a third aspect of the disclosure, a computer-implemented method for controlling a hydraulic system of an electric working machine is provided. The hydraulic system comprises:
- a first pressure supplier powered by a first electric energy storage system,
- a second pressure supplier powered by a second electric energy storage system, and
- a common hydraulic valve system via which the first and second pressure suppliers are configured to supply hydraulic fluid to at least one hydraulic consumer of the working machine.
The first pressure supplier comprises a first pump driven by a first electric motor, and the second pressure supplier comprises a second pump driven by a second electric motor, the first and second pumps being variable displacement pumps arranged to automatically adjust pump displacements in dependence on a hydraulic power demand of the at least one hydraulic consumer. The method comprises:
- determining, by a processing circuitry of a computer system, a first charge level of the first electric energy storage system and a second charge level of the second electric energy storage system, and
- activating, by the processing circuitry, a charge balancing operating mode in response to determining that the second charge level exceeds the first charge level by at least a threshold amount.
In the charge balancing operating mode, the first electric motor is controlled to a first rotational speed being lower than a second rotational speed of the second electric motor, whereby an electric power consumption of the first electric motor is lower than that of the second electric motor.

Advantages and advantageous features correspond to those of the first aspect of the disclosure.

Optionally in some examples, including in at least one preferred example, the method further comprises obtaining, by the processing circuitry, a total hydraulic power demand of the at least one hydraulic consumer, wherein the charge balancing operating mode is only activated in response to determining that the total hydraulic power demand is below a threshold level.

Optionally in some examples, including in at least one preferred example, the threshold level is set in dependence on a maximum hydraulic power demand of the at least one hydraulic consumer, such as to a value within a range of 70-90% of the maximum hydraulic power demand of the at least one hydraulic consumer.

Optionally in some examples, including in at least one preferred example, the working machine comprises a tiltable body configured to carry a payload, and the threshold level is set to a value lower than a hydraulic power demand for dumping of the payload by tilting the tiltable body.

Optionally in some examples, including in at least one preferred example, the method further comprises receiving, in the processing circuitry, weight data indicative of a current weight of the working machine, and setting, by the processing circuitry, the threshold level in dependence on the weight data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic overview of a working machine and a computer system according to an example.
**FIG. 2** is a schematic side view of a working machine according to an example.
**FIG. 3** schematically illustrates a hydraulic system according to an example.
**FIG. 4** is a flowchart illustrating a method according to an example.
**FIG. 5** is a flowchart illustrating a method according to another example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An electrically powered working machine, also referred to as an electric working machine, may comprise two separate electric systems, each powering one driven axle of the working machine, such as a front axle and a rear axle. Each electric system comprises its own electric energy storage system, which may be charged at an electric charging station and in which energy recuperated during, e.g., downhill travel may be stored. When the working machine with separate electric systems further comprises hydraulic consumers, the working machine may comprise a common hydraulic system with two pressure suppliers, each pressure supplier being powered by one of the electric energy storage systems.

Since front and rear axle propulsion and energy recuperation do not necessarily follow each other, there will over time build up a difference in charge levels for the separately provided front and rear electric energy storage systems, even when the charge levels were equal after charging at the charging station. Typical occasions that build up such a difference in charge levels are driving uphill or downhill with poor traction. In these cases, tractive force must be distributed according to the normal force distribution to utilize the available friction. Accordingly, more power is consumed by the rear axle propulsion system when driving uphill and more power is recuperated by the front axle propulsion system when driving downhill. This will drain the rear axle electric energy storage system and lead to a charging stop before the charge level of the front axle electric energy storage system is low.

With separate electric systems, it is normally not possible to transfer electric power from one of the electric energy storage systems to the other when the charge levels begin to differ from one another. Instead, when one of the electric energy storage systems is depleted, a charging stop is necessary, even if the other electric energy storage system still has available electric power. To reduce downtime, it is desirable to provide a method and a system that contribute to balancing of the charge levels of the two electric energy storage systems.

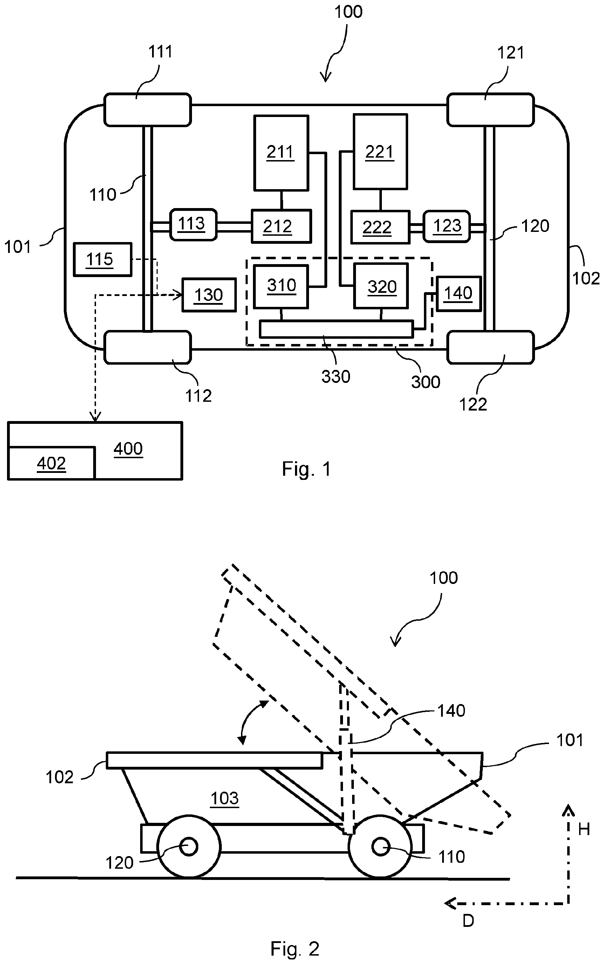

**FIG. 1** schematically illustrates an electric working machine 100 being communicatively connected to a computer system 400 according to an example of the disclosure. The working machine 100 comprises a first axle 110 located near a first end 101 of the working machine 100 and a second axle 120 located near a second end 102 of the working machine 100. A first pair of driven wheels 111, 112 are provided on the first axle 110, and a second pair of driven wheels 121, 122 are provided on the second axle 120.

The working machine 100 further comprises a hydraulic system 300, with a first pressure supplier 310 powered by a first electric energy storage system 211 in the form of a first battery pack, and a second pressure supplier 320 powered by a second electric energy storage system 221 in the form of a second battery pack. The hydraulic system 300 further comprises a common hydraulic valve system 330 via which hydraulic power from the first and second pressure suppliers 310, 320 is distributed to at least one hydraulic consumer 140 of the working machine 100. Although a single hydraulic consumer is illustrated in FIG. 1, the working machine may of course be provided with several hydraulic consumers that receive hydraulic power from the hydraulic system 300. Examples of such hydraulic consumers are hydraulic actuators for steering, dumping, brakes, and suspension.

The first electric energy storage system 211 is configured to provide electric power for driving the first pressure supplier 310, and further for powering a first electric propulsion unit 212 arranged to drive the first axle 110. The second electric energy storage system 221 is configured to provide electric power for driving the second pressure supplier 320, and further for powering a second electric propulsion unit 222 arranged to drive the second axle 120. The first electric propulsion unit 212 is connected to the first axle 110 via a first transmission 113 and the second electric propulsion unit 222 is connected to the second axle 120 via a second transmission 123. The first and second propulsion units 212, 222 may be in the form of electric motor-generators, which consume electric power when working as motors and which generate electric power in a regenerative operating mode.

Although the working machine 100 is herein illustrated with one propulsion unit 212, 222 per driven axle 110, 120, each axle may in other examples according to the disclosure be driven by more than one propulsion unit, such as two or more electric propulsion units per driven axle. Similarly, each electric energy storage system may comprise several battery packs, such as two, three or four battery packs per electric energy storage system. According to one example, each electric energy storage system comprises four battery packs, and two electric propulsion units are provided for driving each driven axle.

The computer system 400 comprises a processing circuitry 402 and may suitably be located on-board the working machine 100. Alternatively, the computer system 400 may be located off-board the working machine 100. For example, the computer system 400 may be a central server or a cloud server and arranged to communicate with an on-board control unit 130 of the working machine 100. The communicative contact between the computer system 400 and the control unit 130 of the working machine 100, indicated by a dashed arrow, may be in the form of wireless communication, such as by use of WiFi, Bluetooth, telecommunication, etc. The on-board control unit 130 may in turn be configured to communicate with different systems of the working machine 100, such as with the first and second pressure suppliers 310, 320.

The working machine 100 may comprise at least one sensor 115 for detecting a weight of the working machine 100 and/or of a payload carried by the working machine 100. The sensor 115 may for example be a weight sensor which measures a weight of the load. Alternatively, by using pressure sensors, the sprung weight of the working machine 100 may be calculated from measured pressures in a hydraulic suspension system. Furthermore, a camera or similar identifying material loaded onto the working machine 100 may be provided. Data from the sensor 115 may be communicated to the computer system 400.

The working machine 100 illustrated in FIG. 1 may, e.g., have a configuration such as schematically illustrated in **FIG. 2****.** Hence, the working machine 100 may be an autonomous working machine that comprises a tiltable body 103 configured to carry a payload. The tiltable body 103 may be pivotable about a transverse axis (not shown) located at the first end 101 of the working machine 100 and is tilted by means of a hydraulic consumer 140 in the form of a set of hydraulic cylinders. The transverse axis is herein perpendicular to a travel direction D and a height direction H of the working machine 100. The working machine 100 may be configured for operation in a confined area, such as in a working site, a quarry, a mine, or similar.

In a working machine 100 having separately driven axles 110, 120, the electric energy storage system that powers a rear axle usually discharges faster than the electric energy storage system that powers a front axle. Hence, during normal operation of the working machine 100, when the first end 101 is a rear end of the working machine 100, the first electric energy storage system 211 will have a tendency to become depleted before the second electric energy storage system 221.

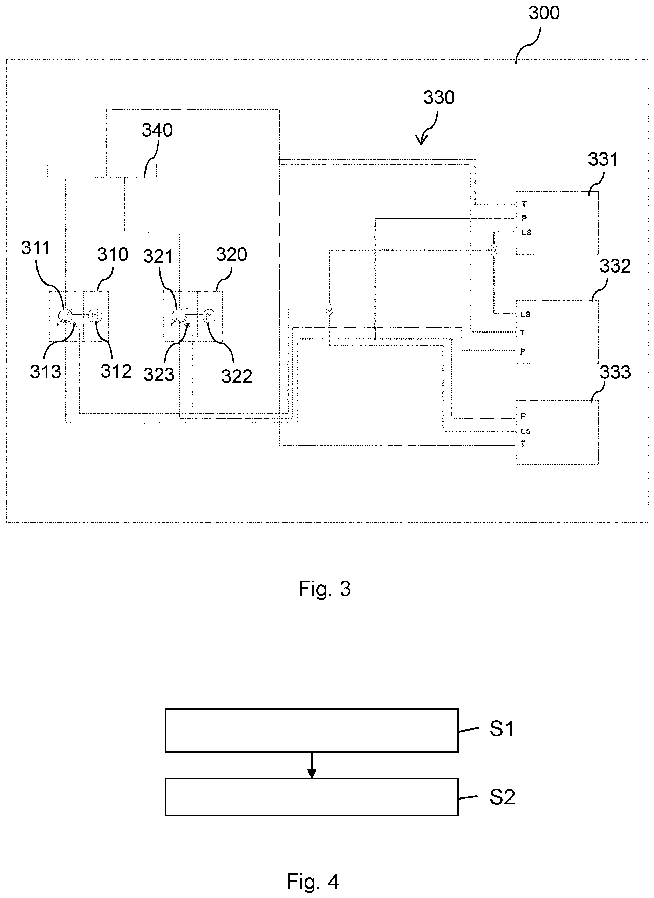

**FIG. 3** schematically illustrates a hydraulic system 300 of a working machine, such as of the working machine 100 according to any of the examples illustrated in FIGS. 1 and 2. As described above, the hydraulic system 300 comprises a first pressure supplier 310, a second pressure supplier 320, and a common hydraulic valve system 330 configured to distribute hydraulic fluid to several hydraulic consumers (not shown). A fluid tank 340 is provided from which hydraulic fluid is supplied to the first and second pressure suppliers 310, 320. The first pressure supplier 310 comprises a first pump 311 driven by a first electric motor 312, in turn powered by the first electric energy storage system 211 as shown in FIG. 1. The second pressure supplier 320 comprises a second pump 321 driven by a second electric motor 322, in turn powered by the second electric energy storage system 221. The first and second pumps 311, 321 are variable displacement pumps arranged to automatically adjust pump displacements, and thereby fluid pressures and flows, in dependence on a hydraulic power demand of the hydraulic consumers.

The common hydraulic valve system 330 comprises a first control valve 331, a second control valve 332, and a third control valve 333. The first control valve 331 is in the illustrated example configured to provide hydraulic fluid to a hydraulic brake (not shown) and a hydraulic suspension system (not shown) of the working machine 100. The second control valve 332 is in the illustrated example configured to provide hydraulic fluid to a set of hydraulic actuators for tilting a tiltable body 103 of the working machine 100 as illustrated in FIG. 2. The third control valve 333 is configured to provide hydraulic fluid to a hydraulic steering system (not shown) of the working machine 100. The common hydraulic valve system 330 further comprises a priority valve (not shown) configured to always supply the steering system, having priority, with a required flow rate, and pass the remaining flow to the other hydraulic consumers, and supply the steering system only in case of hose rapture.

Each control valve 331, 332, 333 comprises a return port T fluidly connected to the fluid tank 340, and a pressure port P fluidly connected to the first and second pumps 311, 321, via which pressurized hydraulic fluid can be supplied. Each control valve 331, 332, 333 further comprises a load sensing port LS fluidly connected to load sensing control ports 313, 323 of the first and second pumps 311, 321, respectively. The load sensing ports LS and the load sensing control ports 313, 323 form a load sensing system that controls the pump displacements of the first and second pumps 311, 321, respectively, in dependence on the current hydraulic power demand of the hydraulic consumers.

According to the disclosure, the processing circuitry 402 of the computer system 400 illustrated in FIG. 1 is configured to determine a first charge level of the first electric energy storage system 211 and a second charge level of the second electric energy storage system 221. The charge level may herein be understood as a state-of-charge (SoC) of the respective electric energy storage system 211, 221. The charge levels may be determined based on data communicated from the electric energy storage systems 211, 221, such as from a battery control unit of the respective electric energy storage system 211, 221.

The processing circuitry 402 is further configured to activate a charge balancing operating mode in response to determining that the second charge level exceeds the first charge level by at least a threshold amount. In the charge balancing operating mode, the first electric motor 312 is controlled to a first rotational speed being lower than a second rotational speed of the second electric motor 322, whereby an electric power consumption of the first electric motor 312 is lower than that of the second electric motor 322. For a constant load, the pump displacement of the first pump 311 is not affected when the rotational speed is reduced. If the load changes, the pump displacement of the first pump 311 is automatically controlled in dependence on the hydraulic power demand as described above. The pump displacement of the second pump 321 is automatically controlled in dependence on the hydraulic power demand, but with the second electric motor 322 working at a higher rotational speed than the first electric motor 312. The second pump 321 will hence deliver a larger flow of hydraulic fluid than the first pump 311. A maximum capacity of the hydraulic system will consequently be lower than when both electric motors 312, 322 are operated at maximum rotational speed.

As a result of the electric power consumption of the first electric motor 312 being lower than that of the second electric motor 322, more electric power will be consumed from the second electric energy storage system 221 than from the first electric energy storage system 211. This will lead to a charge balancing where the charge level of the second electric energy storage system 221 will decrease faster than that of the first electric energy storage system 211. Since the load sensing system remains active during the charge balancing mode, operation of the hydraulic consumers is normally not affected given that the total hydraulic power demand does not exceed the reduced maximum capacity as mentioned above.

The processing circuitry 402 may further be configured to obtain a total hydraulic power demand of the at least one hydraulic consumer, such as by receiving electric motor data relating to torques and rotational speeds of the first and second electric motors 312, 322, respectively. Such data may be communicated from a motor controller or similar of the respective electric motor 312, 322. Additionally, or alternatively, data relating to pressures and flows of the first and second pumps 311, 321 may be used. To collect pressure and flow data, pressure sensors and displacement sensors may be used, wherein the flow from each pump is calculated from the displacement of the pump and the rotational speed of the electric motor driving the pump.

The processing circuitry 402 may be configured to only activate the charge balancing operating mode in response to determining that the total hydraulic power demand is below a threshold level. The threshold level may be set to a fixed value, or it may be set in dependence on, e.g., a weight of the working machine 100. In this case, the processing circuitry may be configured to receive weight data indicative of a current weight of the working machine 100, e.g., from the suspension system of the working machine 100, or from the sensor 115. When the working machine 100 comprises the tiltable body 103 configured to carry a payload, the threshold level may, by way of example, be set to a value corresponding to a hydraulic power demand for dumping of the payload by tilting the tiltable body 103.

The processing circuitry 402 may further be configured to deactivate the charge balancing operating mode when it is determined that a normal operating mode may be resumed. This may, e.g., be when a difference between the first and second charge levels is less than a second threshold amount, wherein the second threshold amount is set to a smaller value than the threshold amount for activating the charge balancing mode, and/or when the total hydraulic power demand is above the threshold level.

**FIG. 4** is a flow chart illustrating a method for controlling a hydraulic system 300 of an electric working machine 100 according to the disclosure. The method is computer-implemented and can be performed by a processing circuitry of a computer system, such as the processing circuitry 402 of the computer system 400 illustrated in FIG. 1. The method may, e.g., be used for controlling the hydraulic system 300 illustrated in FIG. 3, when used in a working machine 100 as illustrated in FIGS. 1 and 2. The method comprises the following actions, which may be taken in any suitable order:
**Action S1:** Determining a first charge level of the first electric energy storage system 211 and a second charge level of the second electric energy storage system 221. This action may be carried out repeatedly, by monitoring the charge levels.
**Action S2:** Activating a charge balancing operating mode in response to determining that the second charge level exceeds the first charge level by at least a threshold amount. In the charge balancing operating mode, the first electric motor 312 is controlled to a first rotational speed being lower than a second rotational speed of the second electric motor 322, whereby an electric power consumption of the first electric motor 312 is lower than that of the second electric motor 322.

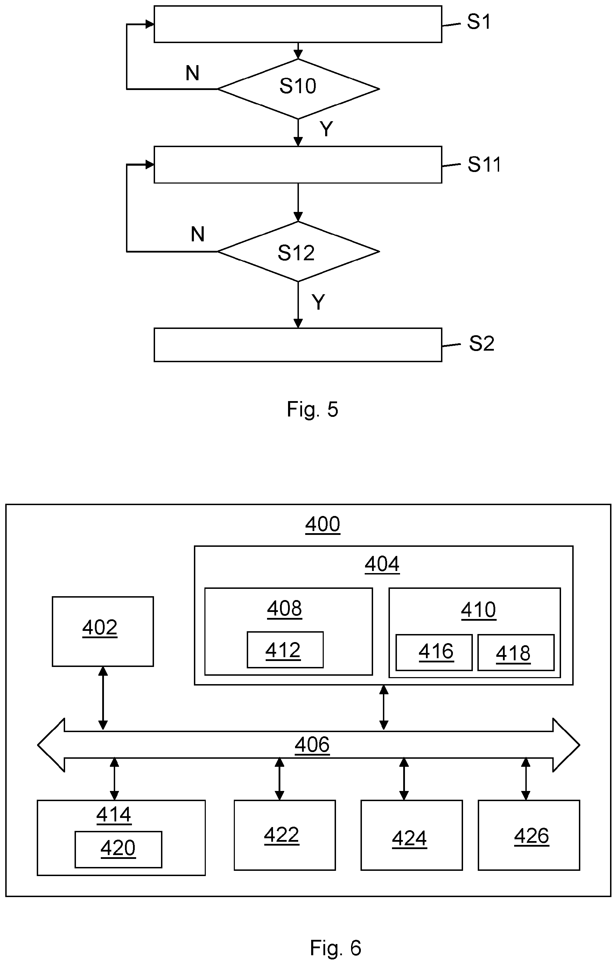

An exemplary method according to the disclosure is illustrated in **FIG. 5****.** The method is carried out as the working machine 100, comprising a tiltable body 103, is used for carrying and dumping a payload. Initially, the working machine 100 is operated in a normal operating mode in which the pump displacements of both pumps 311, 321 are controlled to deliver hydraulic fluid in dependence on the hydraulic power demand and in which the first and second electric motors 312, 322 are operated at the same rotational speed. The charge levels of the first and second electric energy storage systems 211, 221 are continuously monitored. In action S10, it is checked whether the second charge level exceeds the first charge level by at least the threshold amount. If not, the monitoring in action S1 continues and the working machine 100 continues to be operated in the normal operating mode. If it exceeds the first charge level by at least the threshold amount, the method proceeds to an action S11 of obtaining a total hydraulic power demand of the at least one hydraulic consumer 140, and further to an action S12 of determining whether the total hydraulic power demand is below a threshold level, such as a level lower than the hydraulic power needed for dumping of the payload. If the total hydraulic power demand is not below the threshold level, e.g., if the working machine 100 is performing a dumping action, the method returns to action S11 and keeps obtaining the current total hydraulic power demand while the working machine 100 is operated in the normal operating mode. Once it is determined that the hydraulic power demand is below the threshold level, the method proceeds to the action S2 of activating the charge balancing operating mode.

In the examples described herein, the charge balancing operating mode may be deactivated when it is determined that a normal operating mode of the working machine may be resumed. For example, the charge balancing operating mode may be deactivated in response to at least one of:
- determining that a difference between the first and second charge levels is less than a second threshold amount, wherein the second threshold amount is set to a smaller value than the threshold amount for activating the charge balancing mode; and
- determining that the total hydraulic power demand is above the threshold level.

**FIG. 6** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the disclosure are presented as a list of numbered examples.

Example 1. A computer system (400) comprising processing circuitry (402) configured to control a hydraulic system (300) of an electric working machine (100), the hydraulic system (300) comprising:
- a first pressure supplier (310) powered by a first electric energy storage system (211),
- a second pressure supplier (320) powered by a second electric energy storage system (221), and
- a common hydraulic valve system (330) via which the first and second pressure suppliers (310, 320) are configured to supply hydraulic fluid to at least one hydraulic consumer (140) of the working machine,

the first pressure supplier comprising a first pump (311) driven by a first electric motor (312), and the second pressure supplier comprising a second pump (321) driven by a second electric motor (322), the first and second pumps being variable displacement pumps arranged to automatically adjust pump displacements in dependence on a hydraulic power demand of the at least one hydraulic consumer,
the processing circuitry (402) being configured to:
   - determine a first charge level of the first electric energy storage system (211) and a second charge level of the second electric energy storage system (221),
   - activate a charge balancing operating mode in response to determining that the second charge level exceeds the first charge level by at least a threshold amount,
wherein, in the charge balancing operating mode, the first electric motor (312) is controlled to a first rotational speed being lower than a second rotational speed of the second electric motor (322), whereby an electric power consumption of the first electric motor is lower than that of the second electric motor.

Example 2. The computer system of example 1, wherein the processing circuitry is further configured to:
- obtain a total hydraulic power demand of the at least one hydraulic consumer,
wherein the processing circuitry is only configured to activate the charge balancing operating mode in response to determining that the total hydraulic power demand is below a threshold level.

Example 3. The computer system of example 2, wherein the threshold level is set in dependence on a maximum hydraulic power demand of the at least one hydraulic consumer.

Example 4. The computer system of example 3, wherein the threshold level is set to a value within a range of 70-90% of the maximum hydraulic power demand of the at least one hydraulic consumer.

Example 5. The computer system of any of examples 2-4, wherein the working machine (100) comprises a tiltable body (103) configured to carry a payload, and wherein the threshold level is set to a value lower than a hydraulic power demand for dumping of the payload by tilting the tiltable body.

Example 6. The computer system of any of examples 2-5, wherein the processing circuitry is further configured to:
- receive weight data indicative of a current weight of the working machine, and
- set the threshold level in dependence on the weight data.

Example 7. The computer system of any of examples 1-6, wherein, in a normal operating mode, the first and second electric motors (312, 322) are operated at the same rotational speed.

Example 8. A working machine (100) comprising or being communicatively connected to the computer system (400) of any one of examples 1-7, the working machine comprising the hydraulic system (300), the first electric energy storage system (211), and the second electric energy storage system (221).

Example 9. The working machine of example 8, further comprising a first electric propulsion unit (212) configured to be powered by the first electric energy storage system (211), and a second electric propulsion unit (222) configured to be powered by the second electric energy storage system (221), the first electric propulsion unit being arranged to drive a first axle (110) of the working machine, and the second electric propulsion unit being arranged to drive a second axle (120) of the working machine.

Example 10. The working machine of example 9, wherein the first axle is a rear axle of the working machine (100) and wherein the second axle is a front axle of the working machine (100).

Example 11. A computer-implemented method for controlling a hydraulic system (300) of an electric working machine (100), the hydraulic system (300) comprising:
- a first pressure supplier (310) powered by a first electric energy storage system (211),
- a second pressure supplier (320) powered by a second electric energy storage system (221), and
- a common hydraulic valve system (330) via which the first and second pressure suppliers (310, 320) are configured to supply hydraulic fluid to at least one hydraulic consumer (140) of the working machine,

the first pressure supplier comprising a first pump (311) driven by a first electric motor (312), and the second pressure supplier comprising a second pump (321) driven by a second electric motor (322), the first and second pumps being variable displacement pumps arranged to automatically adjust pump displacements in dependence on a hydraulic power demand of the at least one hydraulic consumer,
the method comprising:
   - determining, by a processing circuitry (402) of a computer system (400), a first charge level of the first electric energy storage system (211) and a second charge level of the second electric energy storage system (221),
   - activating, by the processing circuitry, a charge balancing operating mode in response to determining that the second charge level exceeds the first charge level by at least a threshold amount,
   wherein, in the charge balancing operating mode, the first electric motor (312) is controlled to a first rotational speed being lower than a second rotational speed of the second electric motor (322), whereby an electric power consumption of the first electric motor is lower than that of the second electric motor.

Example 12. The method of example 11, further comprising:
- obtaining, by the processing circuitry, a total hydraulic power demand of the at least one hydraulic consumer,
wherein the charge balancing operating mode is only activated in response to determining that the total hydraulic power demand is below a threshold level.

Example 13. The method of example 12, wherein the threshold level is set in dependence on a maximum hydraulic power demand of the at least one hydraulic consumer.

Example 14. The method of example 13, wherein the threshold level is set to a value within a range of 70-90% of the maximum hydraulic power demand of the at least one hydraulic consumer.

Example 15. The method of any of examples 12-14, wherein the working machine (100) comprises a tiltable body (103) configured to carry a payload, and wherein the threshold level is set to a value lower than a hydraulic power demand for dumping of the payload by tilting the tiltable body.

Example 16. The method of any of examples 12-15, further comprising:
- receiving, in the processing circuitry, weight data indicative of a current weight of the working machine, and
- setting, by the processing circuitry, the threshold level in dependence on the weight data.

Example 17. The method of any of examples 11-16, wherein, in a normal operating mode, the first and second electric motors (312, 322) are operated at the same rotational speed.

Example 18. A computer program product comprising program code for performing, when executed by the processing circuitry, the method of any of examples 11-17.

Example 19. A non-transitory computer-readable storage medium comprising instructions, which when executed by the processing circuitry, cause the processing circuitry to perform the method of any of examples 11-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to control a hydraulic system (300) of an electric working machine (100), the hydraulic system (300) comprising:
- a first pressure supplier (310) powered by a first electric energy storage system (211),
- a second pressure supplier (320) powered by a second electric energy storage system (221), and
- a common hydraulic valve system (330) via which the first and second pressure suppliers (310, 320) are configured to supply hydraulic fluid to at least one hydraulic consumer (140) of the working machine (100),
the first pressure supplier (310) comprising a first pump (311) driven by a first electric motor (312), and the second pressure supplier (320) comprising a second pump (321) driven by a second electric motor (322), the first and second pumps (311, 321) being variable displacement pumps arranged to automatically adjust pump displacements in dependence on a hydraulic power demand of the at least one hydraulic consumer (140),
the processing circuitry (402) being configured to:
- determine a first charge level of the first electric energy storage system (211) and a second charge level of the second electric energy storage system (221),
- activate a charge balancing operating mode in response to determining that the second charge level exceeds the first charge level by at least a threshold amount,
wherein, in the charge balancing operating mode, the first electric motor (312) is controlled to a first rotational speed being lower than a second rotational speed of the second electric motor (322), whereby an electric power consumption of the first electric motor (312) is lower than that of the second electric motor (322).

2. The computer system of claim 1, wherein the processing circuitry is further configured to:
- obtain a total hydraulic power demand of the at least one hydraulic consumer (140), wherein the processing circuitry is only configured to activate the charge balancing operating mode in response to determining that the total hydraulic power demand is below a threshold level.

3. The computer system of claim 2, wherein the threshold level is set in dependence on a maximum hydraulic power demand of the at least one hydraulic consumer (140), such as to a value within a range of 70-90% of the maximum hydraulic power demand of the at least one hydraulic consumer (140).

4. The computer system of any of claims 2-3, wherein the working machine (100) comprises a tiltable body (103) configured to carry a payload, and wherein the threshold level is set to a value lower than a hydraulic power demand for dumping of the payload by tilting the tiltable body (103).

5. The computer system of any of claims 2-4, wherein the processing circuitry is further configured to:
- receive weight data indicative of a current weight of the working machine (100), and
- set the threshold level in dependence on the weight data.

6. A working machine (100) comprising or being communicatively connected to the computer system (400) of any one of claims 1-5, the working machine (100) comprising the hydraulic system (300), the first electric energy storage system (211), and the second electric energy storage system (221).

7. The working machine of claim 6, further comprising a first electric propulsion unit (212) configured to be powered by the first electric energy storage system (211), and a second electric propulsion unit (222) configured to be powered by the second electric energy storage system (221), the first electric propulsion unit (212) being arranged to drive a first axle (110) of the working machine (100), and the second electric propulsion unit (222) being arranged to drive a second axle (120) of the working machine (100).

8. A computer-implemented method for controlling a hydraulic system (300) of an electric working machine (100), the hydraulic system (300) comprising:
- a first pressure supplier (310) powered by a first electric energy storage system (211),
- a second pressure supplier (320) powered by a second electric energy storage system (221), and
- a common hydraulic valve system (330) via which the first and second pressure suppliers (310, 320) are configured to supply hydraulic fluid to at least one hydraulic consumer (140) of the working machine (100),
the first pressure supplier (310) comprising a first pump (311) driven by a first electric motor (312), and the second pressure supplier (320) comprising a second pump (321) driven by a second electric motor (322), the first and second pumps (311, 321) being variable displacement pumps arranged to automatically adjust pump displacements in dependence on a hydraulic power demand of the at least one hydraulic consumer (140),
the method comprising:
- determining (S 1), by a processing circuitry (402) of a computer system (400), a first charge level of the first electric energy storage system (211) and a second charge level of the second electric energy storage system (221),
- activating (S2), by the processing circuitry (402), a charge balancing operating mode in response to determining (S 10) that the second charge level exceeds the first charge level by at least a threshold amount,
wherein, in the charge balancing operating mode, the first electric motor (312) is controlled to a first rotational speed being lower than a second rotational speed of the second electric motor (322), whereby an electric power consumption of the first electric motor (312) is lower than that of the second electric motor (322).

9. The method of claim 8, further comprising:
- obtaining (S11), by the processing circuitry (402), a total hydraulic power demand of the at least one hydraulic consumer (140),
wherein the charge balancing operating mode is only activated in response to determining (S 12) that the total hydraulic power demand is below a threshold level.

10. The method of claim 9, wherein the threshold level is set in dependence on a maximum hydraulic power demand of the at least one hydraulic consumer, such as to a value within a range of 70-90% of the maximum hydraulic power demand of the at least one hydraulic consumer (140).

11. The method of any of claims 9-10, wherein the working machine (100) comprises a tiltable body (103) configured to carry a payload, and wherein the threshold level is set to a value lower than a hydraulic power demand for dumping of the payload by tilting the tiltable body (103).

12. The method of any of claims 9-11, further comprising:
- receiving, in the processing circuitry (402), weight data indicative of a current weight of the working machine (100), and
- setting, by the processing circuitry (402), the threshold level in dependence on the weight data.

13. A computer program product comprising program code for performing, when executed by the processing circuitry, the method of any of claims 8-12.

14. A non-transitory computer-readable storage medium comprising instructions, which when executed by the processing circuitry, cause the processing circuitry to perform the method of any of claims 8-12.
